(19) Europäisches Patentamt
European Patent Office
Office européen des brevets

(11) **EP 1 613 053 B1**

(12) **EUROPEAN PATENT SPECIFICATION**

(45) Date of publication and mention
of the grant of the patent:
**14.03.2007 Bulletin 2007/11**

(51) Int Cl.:
**H04N 1/06** *(2006.01)*　　**G02B 26/10** *(2006.01)*

(21) Application number: **05013708.2**

(22) Date of filing: **24.06.2005**

(54) **Inner drum exposure apparatus with elongated spot**

Innentrommel Belichter mit länglichem Bildpunkt

Appareil d'exposition à tambour interne avec point d'image allongè

(84) Designated Contracting States:
**DE FR GB**

(30) Priority: **28.06.2004 JP 2004189832**

(43) Date of publication of application:
**04.01.2006 Bulletin 2006/01**

(73) Proprietor: **FUJIFILM Corporation
Minato-ku
Tokyo (JP)**

(72) Inventors:
• **Miyagawa, Ichirou
Kasei-machi
Ashigarakami-gun
Kanagawa (JP)**
• **Matsuoka, Hiroshi
Kasei-machi
Ashigarakami-gun
Kanagawa (JP)**

(74) Representative: **Klunker . Schmitt-Nilson . Hirsch
Winzererstrasse 106
80797 München (DE)**

(56) References cited:
**EP-A- 0 840 493　　US-A- 5 504 619
US-A- 5 636 049**

## Description

BACKGROUND OF THE INVENTION

Filed of the Invention

The present invention generally relates to an exposure apparatus, and more particularly it pertains to an inner drum exposure apparatus (an inner surface scanning type light beam scanning exposure apparatus) wherein exposure processing is performed by scanning a photosensitive surface disposed on the inner surface of a cylindrical drum by means of a laser beam scanning optical system.

Description of Related Art

Generally, an inner drum exposure apparatus (an inner surface scanning type light beam scanning exposure apparatus) has widely been used, in which scanning exposure processing is performed by guiding a light beam such as a laser beam onto a photosensitive surface of a recording medium disposed on the inner circumferential surface of a cylindrical drum (for example, refer to JP-A No. 10-133132). Meanwhile, the recording medium which has been subjected to an image exposure-recording process is fed, as occasion demands, to an automatic processor and thus a latent image recorded on the recording medium is transformed to a visible image.

In such an inner drum exposure apparatus, ordinarily in order to express halftones by performing exposure processing with respect to the recording medium, an AM screen (a technique for forming a grayscale image from a halftone dot image) is used which expresses halftones in a meshed pattern (so-called micro-checked pattern). More specifically, in an AM screen, a halftone dot image constituting the smallest unit is comprised of a relatively large number of dots, such as for example a total of 196 dots, or 14 (the number of dots in a horizontal direction) x 14 (the number of dots in a vertical direction), and a grayscale image is recorded by performing recording with such halftone dot images arrayed in the form of a 2-dimensional plane. However, when the AM screen is used in order to express halftone, it is possible that Moire fringes are formed, and tone jump is caused.

Another technique for forming a grayscale image from a halftone dot image is one called FM screen, in which the contrasting density of a recorded image is expressed based on an aggregate density of amorphous dots having no regularity. For example, an image comprised of a relatively small number of dots such as 2x2, a total of 4 dots, is dispersed in the form of a 2-dimensional plane, thereby conducting tone expression. The FM screen is advantageous in that it is possible in principle to suppress occurrence of Moire fringes

Thus, in an inner drum exposure apparatus, it is desired that halftone be created in the form of a small mesh by using an FM screen.

However, in a conventional inner drum exposure apparatus, since a structure is adopted in which an image is formed by causing light emitted from a single lateral mode laser light source to be focussed on a scanned surface, a beam spot is shaped in the form of a Gaussian distribution. For a case where a pixel is recorded by exposure to such a Gaussian distribution-shaped beam spot, the design is made such that the half width of the beam spot becomes substantially equal to or greater than the pixel size in order to prevent the spacing between scanlines from opening up. For this reason, conventional inner drum exposure apparatuses have a problem that difficulties are experienced in using an FM screen, since an image produced when an FM screen is recorded by exposure to a beam spot having a gentle edge portion. This is such a beam that makes it likely that the halftone dot image proportion (halftone dot coverage ratio characteristic) would rapidly be changed, and hence a density change would be caused, should the circumference of a recording pixel be changed even slightly by the recording conditions, such as light power change and number of printing sheets, and/or development conditions such as degree of development in an automatic processor.

SUMMARY OF THE INVENTION

In view of the foregoing, the present invention provides a novel and improved inner drum exposure apparatus which is capable of recording an image in a manner such that halftone can be stably expressed using an FM screen.

According to a first aspect of the present invention which is defined in claim 1, there is provided an inner drum exposure apparatus wherein a light beam of a scanning unit, modulated in accordance with image information, is: deflected by a reflective mirror surface, which is rotationally driven; and scanned, with respect to a recording medium supported on an arcuate inner circumferential surface formed on a support body; thereby recording an image. The apparatus comprises a light source, that emits the light beam; a 1/4 wavelength plate, disposed in a light path between the light source and the scanning unit and which converts a linearly-polarized light beam emitted from the light source to circularly-polarized light; and a single-axis crystal optical element disposed between the 1/4 wavelength plate and the reflective mirror surface such that a plane in which the light beam is incident onto and outgoing from the reflective mirror surface and a crystal axis of the single-axis crystal optical element become substantially parallel to each other. The single-axis crystal optical element is mounted so as to rotate integrally with the reflective mirror surface, thereby forming a beam spot configuration such that the light beam is split into substantially equal light quantities of an ordinary ray and an extraordinary ray, and two beam spots are arrayed adjacent to each other in a sub-scanning direction so as to be partially superposed.

According to a second aspect of the present invention, which is defined in claim 10, there is provided an inner drum exposure apparatus wherein a light beam of a scanning unit is: modulated in accordance with image information; deflected by a reflective mirror surface, which is rotationally driven; and, scanned with respect to a recording medium supported on an arcuate inner circumferential surface formed on a support body, thereby recording an image. The apparatus comprises a random polarization unit that causes a randomly polarized light beam to be incident on the reflective mirror surface of the scanning unit; and a single-axis crystal optical element disposed such that a plane in which the randomly polarized light beam is incident onto and outgoing from the reflective mirror surface and a plane containing a crystal optical axis of the single-axis crystal optical element and a normal to the incident plane of the single-axis crystal optical element become substantially coplanar. The single-axis crystal optical element is mounted so as to rotate integrally with the reflective mirror surface, thereby forming a beam spot configuration such that the light beam is split into substantially equal light quantities of an ordinary ray and an extraordinary ray, and two beam spots are arrayed adjacent to each other in a sub-scanning direction so as to be partially superposed.

According to a third aspect of the present invention which is defined in claim 11, there is provided an inner drum exposure apparatus wherein a recording medium is supported on an arcuate inner circumferential surface formed on a support body, and a plurality of light beams, modulated in accordance with image information, are deflected and scanned onto the recording medium arcuately supported to record images. The apparatus comprises a light beam output unit, that emits the plurality of light beams; a scanning unit, including a reflective mirror surface having a rotation axis that coincides with a center axis of the arcuate inner circumferential surface of the support body, and which scans onto the recording medium by reflecting the plurality of light beams by rotating the reflective mirror surface; a light deflecting unit that causes the light beams to be deflected relatively and 2-dimensionally in a plane orthogonal to the rotation axis of the scanning unit, and shifted on the recording medium in a main-scanning direction and in a sub-scanning direction; a control unit that controls the positions where the light beams are shifted on the recording medium by the light deflecting unit, in synchronism with the rotation of the reflective mirror surface; a 1/4 wavelength plate, disposed in a light path between the light beam output unit and the scanning unit, and which converts linearly-polarized plural light beams emitted from the light beam output unit to circularly-polarized light; and a single-axis crystal optical element, disposed between the 1/4 wavelength plate and the reflective mirror surface, disposed such that a plane in which the light beams are incident onto and outgoing from the reflective mirror surface and a plane containing a crystal optical axis of the single-axis crystal optical element and a normal to the incident plane of the single-axis crystal optical element become coplanar. The single-axis crystal optical element is mounted so as to rotate integrally with the reflective mirror surface, thereby forming beam spot configurations such that each of the plurality of light beams is split into substantially equal light quantities of ordinary rays and extraordinary rays, and each two beam spots are arrayed adjacent to each other in a sub-scanning direction so as to be partially superposed.

Other aspects, features and advantages of the present invention will become apparent from the following description taken in conjunction with the accompanying drawings.

BRIEF DESCRIPTION OF THE DRAWINGS

Preferred embodiments of the present invention will be described in detail based on the following figures, in which:

Fig. 1 is a schematic diagrammatic view showing the inner drum exposure apparatus according to a first embodiment of the present invention;
Fig. 2 is a schematic diagrammatic view showing a major portion of a spinner mirror device taken out from the inner drum exposure apparatus according to a first embodiment of the present invention;
Fig. 3 is an explanatory view showing the operation of a single-axis crystal optical element for use with the inner drum exposure apparatus according to a first embodiment of the present invention;
Fig. 4 is an explanatory view of a light amount distribution of beam spots which have been split in the inner drum exposure apparatus according to a first embodiment of the present invention;
Fig. 5 is an explanatory view showing a light amount distribution of a gauss distributed beam spot shape which has so far been commonly used, for comparison with a light amount distribution of beam spots which have been split in the inner drum exposure apparatus according to a first embodiment of the present invention;
Fig. 6 is a schematic diagrammatic view showing the inner drum exposure apparatus according to a second embodiment of the present invention;
Figs. 7A-7C are explanatory views illustrating the principles of a second embodiment of the present invention;
Figs. 8A-8B are explanatory views illustrating the principles of a second embodiment of the present invention;
Fig. 9 is an explanatory view showing scanning lines on a recording medium according to a second embodiment of the present invention;
Figs. 10A and 10B are explanatory views showing loci of paths of light beams on a surface which is conjugate to the recording medium according to a second embodiment of the present invention;

Fig. 11 is a diagrammatic view showing a circuit arrangement for driving an acoustic-optical element for use with the inner drum exposure apparatus according to a second embodiment of the present invention.

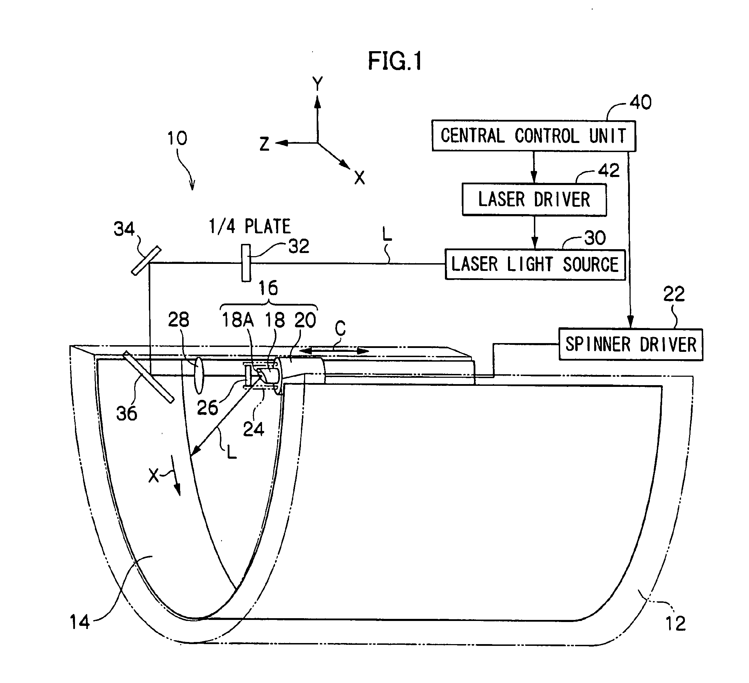

The inner drum exposure according to a first embodiment of the present invention will be described with reference to Figs. 1 through 5. The inner drum exposure apparatus according to the first embodiment of the present invention is configured such that stable halftone recording can be achieved using an FM screen. In this inner drum exposure apparatus, should the circumference of a recording pixel be changed even slightly by the recording conditions, such as light power change and number of sheets printing, and/or development conditions, such as degree of development in an automatic processor, it is likely that the halftone dot image proportion (halftone dot coverage ratio characteristic) will be rapidly changed. Therefore, in order to decrease the likelihood that a density change will be caused, an arrangement is used in which the shape of a recording spot in the sub-scanning direction is made rectangular, and the spot size in the main-scanning direction is made smaller than a recording pixel.

Referring to Fig. 1, the inner drum exposure apparatus according to the first embodiment of the invention is schematically shown, indicated by the reference numeral 10. This inner drum exposure apparatus 10 includes as a major component a support body 12 having an arcuate inner circumferential surface configuration (configuration forming a portion of a cylindrical inner circumferential surface) and which supports a recording medium 14 (such as a photopolymer plate, a common PS plate, or a silver salt type photosensitive material) along the inner circumferential surface of the support body 12.

Further, in the inner drum exposure apparatus 10, an unrecorded recording medium 14 is fed by a recording medium feed/discharge device (not shown) and subjected to exposure processing after having been disposed along the inner circumference of the support body 12 and positively in close contact therewith. The recording medium 14 which has been subjected to exposure processing, is discharged from the support body 12 to the exterior.

In the inner drum exposure apparatus 10, a spinner mirror device 16, which serves as a scanning unit, is provided at the center position of the arcuate configuration of the support body 12. The spinner mirror device 16 includes a column-shaped rotary shaft 18 which can be rotated by a motor 20 about the center axis thereof (which corresponds to the center axis of the arcuate configuration of the support body 12). Further, the rotary shaft 18 of the spinner mirror device 16 is provided on its fore end with a reflective mirror surface 18A which forms an angle of 45 degrees with respect to the rotation axis of rotary shaft 18.

The spinner mirror apparatus 16, which is adapted to serve as a scanning unit, is scanningly moved at a constant speed by a sub-scanning moving unit (not shown) in the direction of the center axis of the arcuate configuration of the support body 12 (the left right direction of Fig. 1, indicated by arrow C). Further, the spinner mirror device 16 has a motor 20 thereof rotation-controlled by a spinner driver 22 and is movement-controlled in a sub-scanning direction by the sub-scanning moving unit (not shown).

Furthermore, the inner drum exposure apparatus 10 is structured such that beam splitting is performed and main-scanning is carried out on a recording surface of the recording medium 14, which is disposed on the inner circumferential surface of the support body 12.

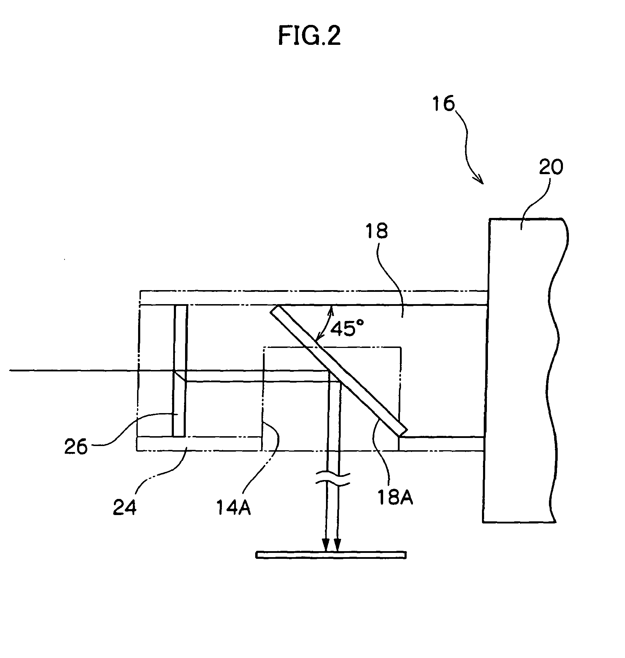

To this end, on the spinner mirror device 16 side, a single-axis crystal optical element 26 is provided on a holder 24 which is secured to the rotary shaft 18 so as to rotate therewith. Meanwhile, the holder 24 is configured, for example, in a cylindrical shape and formed with a through-hole 14A (shown on Fig. 2) through which a light beam reflected at the reflective mirror surface 18A is permitted to pass toward the recording medium 14.

The single-axis crystal optical element 26 may be configured such that it is disposed in an optical path between a condensing lens 28 on the light source side and the reflective mirror surface 18A of the spinner mirror device 16, and mounted so as to rotate with the reflective mirror surface 18A. Meanwhile, the inner drum exposure apparatus 10 may be structured in various ways using, as the single-axis crystal optical element 26, an optical element which is capable of performing parallel splitting by a beam displacing prism.

As the single-axis crystal optical element 26, as shown in Fig.2, use is made of one in which the crystal optical axis of a beam displaying prism is sloped 45 degrees with respect to the normal of the incident plane, for example.

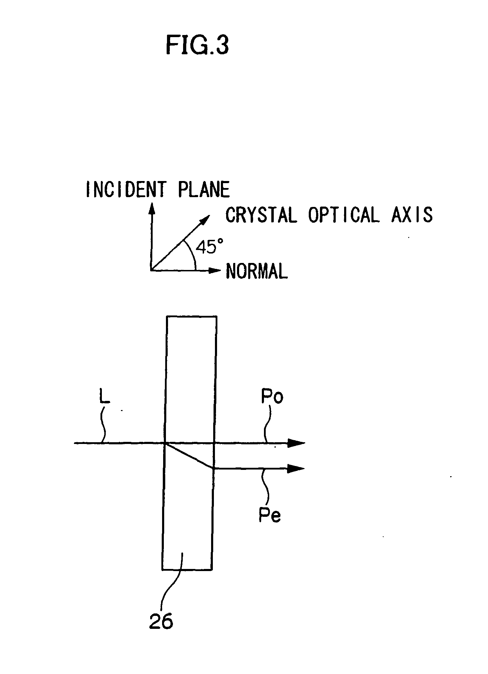

On entering the single-axis crystal optical element 26, a circularly-polarized light beam (or a randomly-polarized light beam which is modulated to an image signal by an unillustrated random polarization unit) is split into equal light quantities of an ordinary ray Po and an extraordinary ray Pe, as shown in Fig. 3. In this case, the ordinary ray Po and the extraordinary ray Pe are shifted to be parallel with each other. For example, when attempting to make the shift quantity (splitting width) 5.5 $\mu$m at a light wavelength of 405nm by the single-axis crystal optical element 26, crystalline quartz may be used as the material of the single-axis crystal optical element 26, and the thickness thereof may be made about 0.904mm. Quartz which is used as the material of the single-axis crystal optical element 26 is advantageous in that it is stable material-wise and inexpensive.

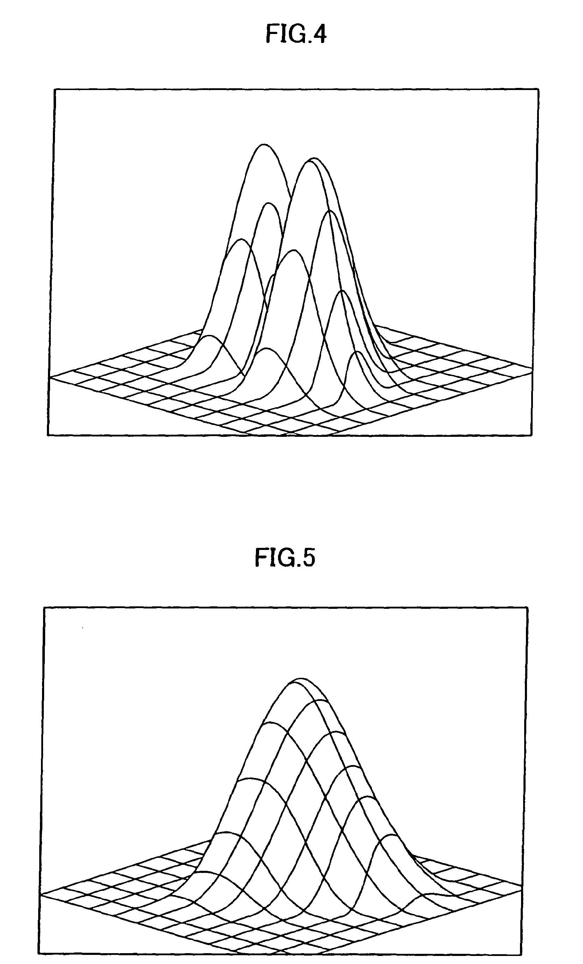

When a beam spot configuration is formed in which a light beam is split into equal light quantities of an ordinary ray Po and an extraordinary ray Pe (a system in which a light beam is split angle-wise may be adopted) and the light rays Po and Pe are in turn shifted in parallel with each other and superposed upon each other (when a beam is split so as to form beam spots), a state occurs such that two Gaussian beams, each having a half width of 5μm, are shifted 5.5μm and superposed upon each other (a split beam state), as shown in Fig. 4, and the beam spot configuration becomes more closely rectangular in the sub-scanning direction and sharp in the main-scanning direction (the edge portion of the beam spot becomes sharp).

When this is compared with a comparative example of Fig. 5, which illustrates a case of a half width of 8.8μm (1/e2 width 15μm) as in the configuration of a conventional Gauss-distributed beam spot, the difference in effect is clear from the fact that a state occurs in which the configuration of a conventional Gauss-distributed beam spot is circular in cross-section and does not extend in the sub-scanning direction and yet gradually widens out towards the edges so as to become gentle in the main-scanning direction as well (a state in which the edge portion of the beam spot is gentle)

As shown in Fig. 3, the inner drum exposure apparatus 10 is structured such that a state occurs in which two beam spots are superposed in the sub-scanning direction (a state in which two beam spots are arrayed adjacent to each other in the sub-scanning direction so as to be partially superposed) by disposing the single-axis crystal optical element 26 so that the plane in which a light beam is incident on and outgoing from the reflective mirror surface 18A of the spinner mirror device 16 is coplanar with a plane including the crystal optical axis and the normal to the incident plane of the single-axis optical element 26.

As shown in Fig. 1, in the inner drum exposure apparatus 10, for the purpose of performing a scan in the main-scanning direction on the recording surface of the recording medium 14 by performing beam splitting, an optical system is provided on the side of a light source which projects a light beam, or a randomly-polarized light beam, onto the side of the spinner mirror 16.

The optical system on the light source side includes a semiconductor laser light source (LD) 30 which emits a laser beam L consisting of substantially linearly polarized light, and a light focussing optical system which focuses the laser beam emitted by the semiconductor laser light source 30 onto the exposure surface of the recording medium 14. The semiconductor laser light source 30 may use a single lateral mode semiconductor laser having an intensity distribution such that the light intensity is high at the center and becomes gradually lower as the distance from the center increases.

The optical system on the light source side is structured by arranging a 1/4 wavelength plate, a reflective mirror 34, a reflective mirror 36, and a condensing lens 28 in that order from the semiconductor laser light source 30.

The 1/4 wavelength plate 32 is arranged such that a laser beam L consisting of linearly polarized light emitted from the semiconductor laser light source 30 is converted to circularly polarized light as a result of having passed through the 1/4 wavelength plate 32. Further, the circularly polarized laser beam L which has been converted to circularly polarized light is condensed by the condensing lens 28 and then passed through the single-axis optical element 26; thus the circularly polarized laser beam L is split into beams of equal light quantity and the split laser beams are shifted to be parallel with respect to each other so that two beam spots can be superposed in the sub-scanning direction. In such a state, the split beams are caused to be incident in a direction such that the direction in which the circularly polarized laser beam L is split in equal proportions and the split laser beams are shifted to be parallel with respect to each other is parallel with a predetermined incident reflection surface at the reflective mirror surface 18A of the spinner mirror device 16. Further, the laser beams are reflected at the reflective mirror surface 18A, distributed in an approximately rectangular shape with respect to the sub-scanning direction, and focussed at focussing spots on the recording medium 14 disposed on the inner circumferential surface of the support body 12, and perform recording processing.

For a case where the semiconductor laser light source 30 emits a laser beam L of circularly polarized light or a randomly polarized light, the optical system on the light source side is structured as an optical system in which the 1/4 wavelength plate 32 is not used.

As shown in Fig. 1, in the inner drum exposure apparatus 10, the operation for recording an image on the recording medium 14 is performed while controlling the spinner mirror device 16 and the semiconductor laser light source 30 by a central control unit 40. Further, in the inner drum exposure apparatus 10, when image information to be exposed is inputted from an unillustrated input device, and an exposure processing start command is transmitted to the central control unit 40, the central control unit 40 generates an image signal based on the image information to be exposed and transmits this image signal to a laser driver 42. In response thereto, the laser driver 42 drives and controls the semiconductor laser light source 30 such that a laser beam modulated based on the image information is emitted from the semiconductor laser light source 30 and irradiated onto the spinner mirror device 16 by the optical system on the light source side.

Further, at the same time, the central control unit 40 controls rotation of the motor 20 to turn the reflective mirror surface 18A such that the laser beam L entering the reflective mirror surface 18A from the optical system on the light source side is reflected at the reflective mirror surface 18A. In this way, a scanning exposure in the main-scanning direction is carried out with respect to the recording medium 14, and a control signal is transmitted to the spinner driver 22. The spinner driver 22 which has received the control signal controls the unillustrated sub-scanning moving unit, thereby permitting the spinner mirror device 16 to perform a moving scan at a uniform speed in the axial direction of the center axis of the arcuate configuration of the support body 12 (in the directions of arrows C, i.e., in the leftward and rightward directions as viewed in Fig. 1). Thus, by moving the spinner mirror device 16 in the sub-scanning direction while performing scanning exposure in the main-scanning direction by the spinner mirror device 16, a process for recording a 2-dimensional image onto the entire recording surface of the recording medium is performed.

Description will next be made of the performance and operation of the inner drum exposure apparatus according to the first embodiment of the present invention.

In the inner drum exposure apparatus 10, the semiconductor laser light source 30, which is controlled by the central control unit 40 and the laser driver 42, provides a laser beam L which is modulated in accordance with image information and caused to be incident on the 1/4 wavelength plate 32. After being incident on the 1/4 waveguide plate 32, the laser beam L, which is substantially linearly polarized light, is converted to circularly polarized light, which in turn is reflected by the reflection mirror 34 and the reflection mirror 36, condensed by the condensing lens 28, and caused to enter the single-axis crystal optical element 26. The laser beam L, which is now circularly polarized light, is split to ordinary ray Po and extraordinary ray Pe when passing through the single-axis crystal optical element 26. Meanwhile, the refraction angle for the extraordinary ray Pe can be arbitrarily tailored depending on the thickness in the direction of the optical axis and/or the material of the single-axis crystal optical element 26. Further, the single-axis crystal optical element 26 is arranged such that the ordinary ray Po and the extraordinary ray Pe, which are split in the sub-scanning direction, are set so as to have an equal intensity.

The ordinary ray Po and the extraordinary ray Pe, which are split in the sub-scanning direction by the single-axis crystal optical element 26 and adjusted in intensity, are reflected at the reflection mirror surface 18A and then focussed at focussing spots, distributed in an approximately rectangular shape with respect to the sub-scanning direction, on the recording medium 14. More specifically, in this inner drum exposure apparatus 10, exposure processing is performed while a state is constantly maintained in which a beam is split and distributed in an approximately rectangular configuration, while at the same time the beam spot having a sharp edge portion is elongated in the sub-scanning direction (that is, a state in which the longitudinal direction of the approximately rectangular distribution of a beam spot coincides with the sub-scanning direction (the direction orthogonal to the main-scanning direction)). Thus, an image produced when an FM screen is recorded can be recorded in a manner such that halftones are stably expressed using an FM screen, while the circumference of a recording pixel is not changed at all by recording conditions, such as a light power change and number of printing sheets, and/or development conditions, such as degree of development in an automatic processor. Thereby the halftone dot image proportion (halftone dot coverage ratio characteristic) is prevented from being rapidly changed, so that causing changes in density becomes more difficult.

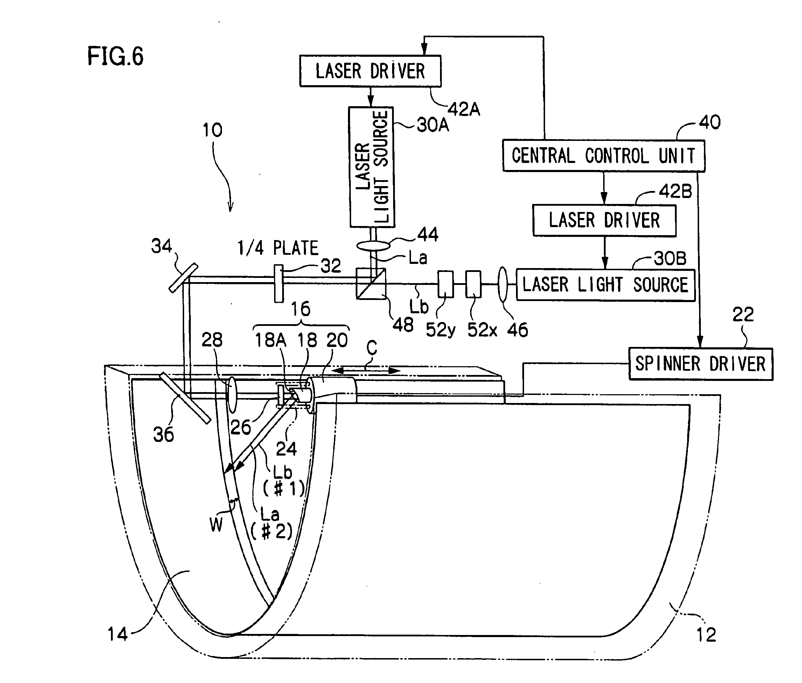

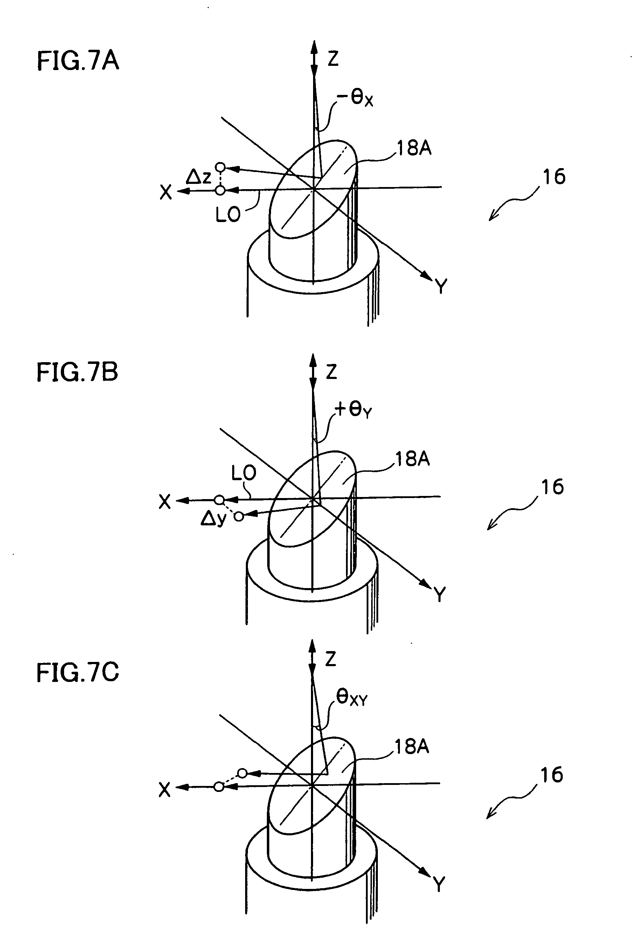

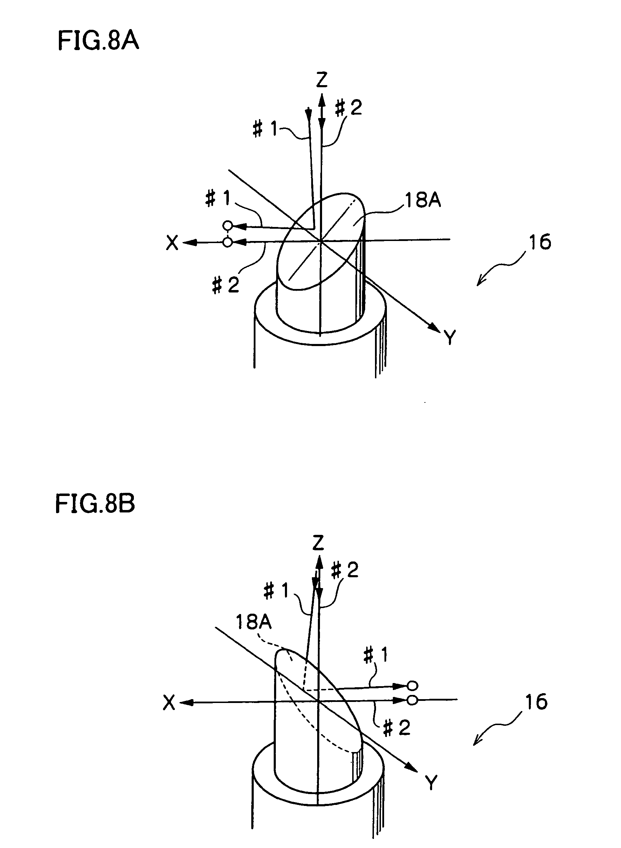

Next, the inner drum exposure apparatus according to a second embodiment of the present invention will be described with reference to Figs. 6 to 9. Firstly, the principles of the second embodiment of the present invention will be explained with reference to Figs. 7A to 7C and Figs. 8A to 8B. Meanwhile, parts corresponding to the first embodiment are indicated by like reference numerals, and description thereof will be omitted.

When the reflective mirror surface 18A of the spinner mirror device 16 serving as a scanning unit is oriented as shown in Fig. 7A (the minor axis of the reflective mirror surface 18A coincides with the Y-axis), by causing the incident direction of a laser beam LO, incident on the center of reflective mirror surface 18A along the Z-axis, to be shifted by $-\theta X$ in the X-axis direction with respect to the spinner mirror device 16, the reflected laser beam L is shifted by $+\Delta z$ in the Z-axis direction in a predetermined plane orthogonal to the X-axis. Further, as shown in Fig. 7B, by causing the laser beam LO to be shifted by $+\theta Y$ in the Y-axis direction with respect to the spinner mirror device 16, the reflected laser beam LO is shifted by $+\Delta y$ in the Y-axis direction. Thus, by causing the laser beam LO to be shifted by $\theta XY$ in the Y-axis direction, the reflected laser beam LO be relatively 2-dimensionally displaced on the recording medium. Meanwhile, note that a structure may be adopted in which by causing two laser beams to be shifted by respective distances in respective directions, reflected laser beams are displaced 2-dimensionally on the recording medium.

Here, by causing a laser beam #1 to be shifted by a predetermined amount in the negative X-axis direction and in the positive Y-axis direction, reflected laser beams #1 and #2 can be modified to array along the Z-axis direction on a X-Z plane as shown in Fig. 8A. Similarly, when the reflective mirror surface 18A of the spinner mirror device 16 is oriented as shown in Fig. 8B, by causing a laser beam #1 to be shifted by a predetermined amount in the positive X-axis direction and in the positive Y-axis direction, reflected laser beams #1 and #2 can be modified to array on an X-Z plane as shown in Fig. 8B.

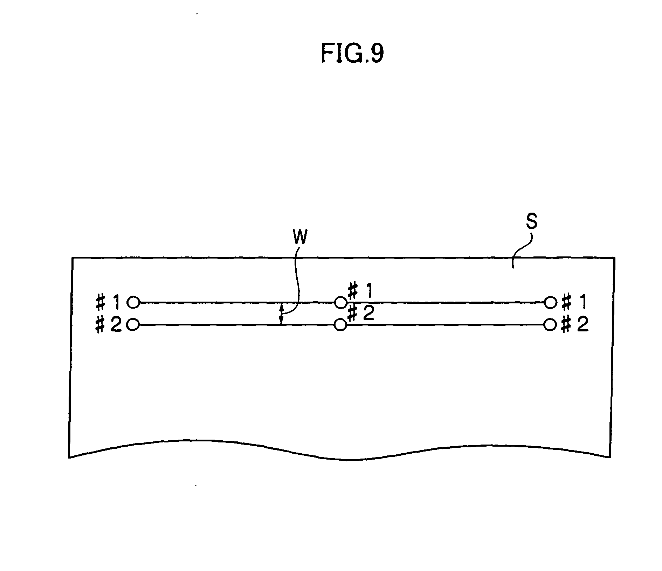

As can be seen, by 2-dimensionally adjusting the direction in which the laser beam #1 is incident on the reflective mirror surface 18A, spots of the respective laser beams #1 and #2 on a recording sheet S can always be arrayed in the Z-axis direction. In this way, as shown in Fig. 9, scanlines which are recorded on the recording medium 14 by the respective laser beams #1 and #2 can be formed as parallel straight lines over the entire scanning region, while at the same time the lengths of the scanlines can be made equal to each other.

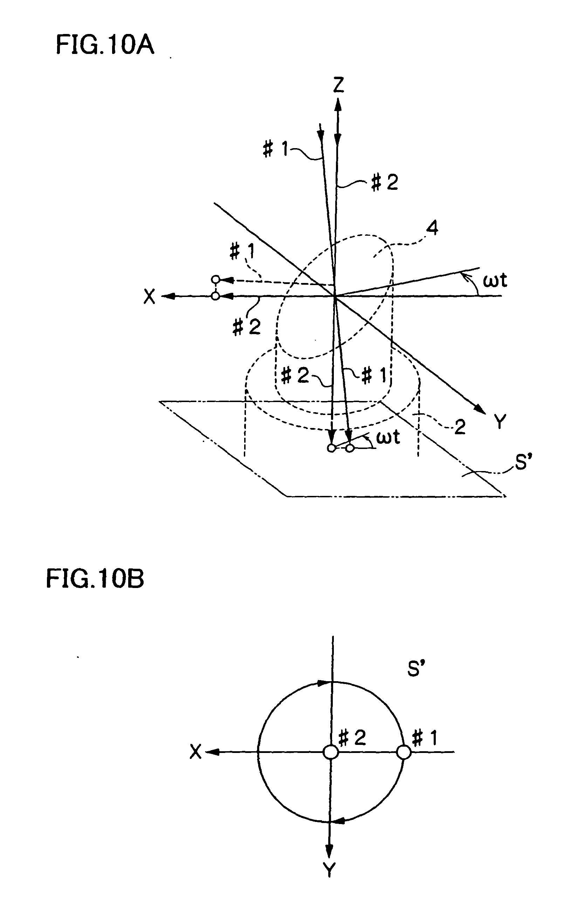

Now, when the spots of laser beams #1 and 2# incident on the reflective mirror surface 18A of the spinner mirror device 16 are projected onto a plane S', which is conjugate to the recording medium 14, as shown in Fig. 10A, the locus of the laser beam #1 on the conjugate plane S' which follows the rotation of the spinner mirror device 16 becomes a circle defined by the following equations as shown in Fig. 10B:

$$X = - W \cos\omega t$$

$$Y = - W \cos\omega t$$

where $\omega$ is the angular speed of the spinner mirror device 16, and W is the width of split of the laser beams #1 and #2 on the scanning surface (the distance between the position of the beam spot of the laser beam 1# on the scanning surface and the position of the beam spot of the laser beam #2 on the scanning surface).

Consequently, by causing the laser beam #1 to be deflected in accordance with the above equations and guided to the scanning unit, it is possible to form on the scanning surface plural scanlines which are separated by a constant spacing corresponding to the divided width W, as shown in Fig. 9.

Next, the structure of the inner drum exposure apparatus according to the second embodiment of the present invention will be explained with reference to Fig. 6. The inner drum exposure apparatus according to the second embodiment of the present invention uses two, a first and a second, semiconductor laser light sources 30A and 30B (light beam output units). More specifically, the first and second semiconductor laser light sources 30A and 30B emit linearly polarized light beams (laser beams) La and Lb which in turn are converted to parallel beams by collimating lenses (collimator lenses) 44 and 46, respectively.

The laser beam La emitted from the first semiconductor laser light source 30A is guided to a polarized beam splitter 48 and combined with the second laser beam Lb. As in the above-described inner drum exposure apparatus shown in Fig. 1, the combined light beams La and Lb are guided to the spinner mirror device 16 of the scanning optical system including the single-axis crystal optical element 26 via the 1/4 wavelength plate 32, the reflection mirror 34, the reflection mirror 36, and the condensing lens 28. Meanwhile, when the two semiconductor laser light sources 30A and 30B are used as light sources as in this embodiment, a laser driver 42A for the first semiconductor laser light source 30A and a laser driver 42B for the second semiconductor laser light source 30B are separately provided as light beam output units, and image signals generated by the central control unit 40 are transmitted to the laser drivers 42A and 42B. Thereupon, the respective laser drivers 42A and 42B drive control the first and second semiconductor laser light sources 30A and 30B, such that laser beams La and Lb, modulated based on their respective image signals, are emitted from the light sources 30A and 30B and irradiated onto the spinner mirror device 16 via the optical system on the light source side.

Further, in the light source side optical system for the second semiconductor laser optical source 30B, the second laser beam Lb, emitted from the second semiconductor laser light source 30B and converted to a parallel beam by the collimating lens 46, is passed through an acousto-optic element 52X serving as a light deflecting unit which deflects the second laser beams Lb in the X-axis direction of the spinner mirror device 16 and then through an acousto-optic element 52Y serving as a light deflecting unit which deflects the second laser beam Lb in the Y-axis direction. Subsequently, the second laser beam Lb is guided to a deflected beam splitter 48 and combined with the first laser beam La. The respective light beams La and Lb thus combined are converted to right-handed circularly polarized light and left-handed circularly polarized light which in turn are irradiated toward the spinner mirror device 16 by the light source side optical system as described above.

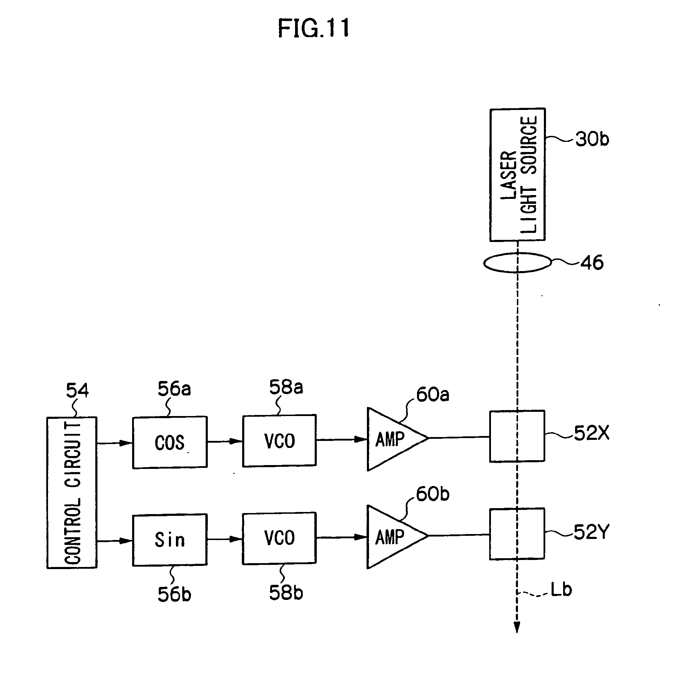

The respective acousto-optic elements 52X and 52Y which are light deflecting units are controlled by a circuit arrangement shown in Fig. 11. This circuit arrangement as a control unit includes: a control circuit 54 which generates a control clock signal based on a signal which is derived from an unillustrated encoder provided in the spinner mirror device 16; a cosine-wave signal generating circuit 56a that generates a cosine wave voltage signal (X = - a. cos $\omega$t) in accordance with the control clock signal; a sine wave signal generating circuit 56b that generates a sine wave voltage signal (Y = - a .sin $\omega$t) in accordance with the control clock signal; a voltage-controlled oscillator 58a that generates a frequency-modulated signal from the cosine wave voltage signal; a voltage-controlled oscillator 58b that generates a frequency-modulated signal from the sine wave voltage signal; an amplifier 60a that amplifies and supplies the frequency-modulated signal derived from the voltage-controlled oscillator 58a to the acousto-optic element 52X; and an amplifier 60b that amplifies and supplies the frequency-modulated signal derived from the voltage-controlled oscillator 58b to the acousto-optic element 52Y.

Next, description will be made of the performance and operation of the inner drum exposure apparatus structured as above in accordance with the second embodiment of the present invention.

The second laser beam Lb emitted from the second semiconductor laser light source 30B and converted to a parallel beam by the collimating lens 46 is deflected in the X-axis direction by the acousto-optic element 52X which is a light deflecting unit, and subsequently deflected in the Y-axis direction by the acousto-optic element 52Y which is a light deflecting unit (see Figs. 8A and 8B). Further, the second laser beam Lb is guided to the polarized beam splitter 48 and combined with the first laser beam La. Further, the second laser beam Lb is introduced into the spinner mirror device 16 by the light source side optical system.

The spinner mirror device 16 reflects and deflects the second laser beam Lb (#1) by the reflective mirror surface 18A which rotates about the Z-axis, and guides the second laser bean Lb to the recording medium 14.

On other hand, the first laser beam La (#2) is introduced along the axis of rotation of the spinner mirror device 16, reflected and deflected by the reflective mirror surface 18A, and guided to the recording medium 14.

Next, the controlling of the second laser beam Lb (#1) emitted from the second semiconductor laser light source 30B will be described in detail with reference to Fig. 11.

Firstly, the control circuit 54 as a control unit supplies a control clock signal to the cosine wave signal generating circuit 56a, based on a positional signal which is derived from the unillustrated encoder provided in the spinner mirror device 16. The cosine wave voltage signal ($X = - a.\cos \omega t$) outputted from the cosine wave signal generating circuit 56a is converted to a frequency-modulated signal by the voltage-controlled oscillator 58a, and then supplied to the acousto-optic element 52X via the amplifier 60a. In this case, based on this cosine wave voltage signal, the acousto-optic element 52X deflects the first laser beam Lb (#1) in the X-axis direction as shown in Figs. 8A and 8B.

Further, the control circuit 54 as a control unit supplies a control clock signal to the sine wave signal generating circuit 56b. The sine wave voltage signal ($Y = - a.\sin \Box t$) derived from the sine wave signal generating circuit 56b is converted to a frequency-modulated signal by the voltage-controlled oscillator 58b, and then supplied to the acousto-optic element 52Y via the amplifier 60b. In this case, based on this sine wave voltage signal, the acousto-optic element 52Y deflects the second laser beam Lb (#1), which is deflected in the X-axis direction by the acousto-optic element 52X, in the Y-axis direction as shown in Figs. 8A and 8B.

As a result of this, the second laser beam Lb (#1) guided to the reflective mirror surface 18A of the spinner mirror device 16 draws an approximately circular locus on a plane S', which is orthogonal to the rotary shaft 18 of the spinner mirror device 16, in synchronism with the rotation of the spinner mirror device 16, as shown in Figs. 10A and 10B.

On the other hand, the first laser beam La (#2) emitted from the first semiconductor laser light source 30A is guided to the recording medium 14 without moving on the plane S', which is orthogonal to the rotary shaft 18.

Subsequently, as shown in Fig. 9, the first laser beam La (#2) and the second laser beam Lb (#1), which are controlled so as to be uniformly spaced from each other, are guided to the recording medium 14, and thus an image is recorded thereon. In this case, the spacing between the first and the second laser beam can be easily adjusted based on amplification factors which are set in the amplifiers 60a and 60b.

More specifically, two parallel scanlines which are uniform in spacing and in length are formed on the recording medium 14, as shown in Fig. 9. Along with this, as in the above-described first embodiment, the two scanlines are maintained all the time, under the action of the 1/4 wavelength plate 32 and the single-axis crystal optical element 26, in a state in which beam splitting is carried out so as to form approximately rectangular beam spots by distributing the beam spots in equal light quantity and equally in the sub-scanning direction and by causing the beam spots to be shifted and superposed each other. Thus each of the beam spots of the two scanlines is distributed in an approximately rectangular configuration while at the same time the edge portions thereof becomes steep so that each beam spot configuration is elongated in the sub-scanning direction (that is, a state in which the longitudinal direction of the approximately rectangular distribution of each beam spot coincides with the sub-scanning direction (the direction orthogonal to the main-scanning direction)).

In the inner drum exposure apparatus according to the second embodiment of the present invention, exposure processing is performed using beam-split two scanlines as described above, and consequently an image produced when an FM screen is recorded can be rapidly recorded in a manner such that a halftone is stably expressed using an FM screen while the circumference of a recording pixel is not changed at all by recording conditions, such as a light power change and number of printing sheets, and/or development conditions, such as a degree of development in an automatic processor. Thereby rapid changes in the halftone dot image proportion (halftone dot coverage ratio characteristic) are prevented, so that a density change is prevented from being caused. Further, according to the second embodiment of the present invention, it is possible to enhance the reliability of recording accuracy based on scanning, by increasing the number of light beams and setting the rotation speed of the scanning unit at a low value.

Although in the second embodiment described above, the acousto-optic elements 52X and 52Y, which are light deflecting units, are structured seperately, it is to be noted that these acousto-optic elements may be structured integrally such that the deflections in the X-axis and Y-axis directions can be achieved by a single acousto-optic element. Further, an electro-optical element may be used instead of an acousto-optic element. Still further, three or more semiconductor laser light sources may be provided such that an image can be recorded using laser beams emitted from those light sources. Furthermore, an arrangement may be adopted in which a laser beam emitted from a semiconductor laser light source is split into a predetermined number of laser beams by a beam splitter and an image is recorded using such split laser beams

While the present invention has been illustrated and described with respect to specific embodiments thereof, it is to be understood that the present invention is by no means limited thereto and encompasses various modifications and changes which are possible within the scope of the appended claims.

**Claims**

1. An inner drum exposure apparatus wherein a light beam modulated in accordance with image information is deflected, by a rotationally driven reflective mirror surface of a scanning unit, and scanned with respect to a recording medium supported on an arcuate inner circumferential surface (14) formed on a support body, thereby recording an image, the apparatus comprising:

    a light source (30) that emits a linearly polarized light beam;
    a 1/4 wavelength plate (32) disposed in a light path between the light source and the scanning unit (16) and which converts the linearly-polarized light beam emitted from the light source to circularly-polarized light; and
    a single-axis crystal optical element (26) disposed between the 1/4 wavelength plate and the reflective mirror surface (18A), and mounted so as to rotate integrally with the reflective mirror surface such that a plane in which the light beam is incident onto and outgoing from the reflective mirror surface and a crystal axis of the single-axis crystal optical element becomes substantially parallel to each other, wherein the light beam is split by the single-axis crystal optical element into equal light quantities in an ordinary ray and an extraordinary ray which form two beam spots arrayed adjacent to each other in a sub-scanning direction so as to be partially superposed onto the arcuate inner surface.

2. The inner drum exposure apparatus according to claim 1, wherein the scanning unit comprises a spinner mirror device (18,20)

3. The inner drum exposure apparatus according to claim 1, wherein the single-axis crystal optical element comprises a beam displacing prism whose crystal optical axis is sloped 45 degrees with respect to a normal of an incident plane.

4. The inner drum exposure apparatus according to claim 1, wherein the single-axis crystal optical element uses crystalline quartz as a material thereof.

5. The inner drum exposure apparatus according to claim 1, wherein the light source comprises a semiconductor laser light source.

6. The inner drum exposure apparatus according to claim 5, wherein the semiconductor laser light source comprises a single lateral mode semiconductor laser having an intensity distribution such that the light intensity is high at a center and becomes gradually lower as a distance from the center increases.

7. The inner drum exposure apparatus according to claim 1, further comprising a light source side optical system including a first (34) and a second (36) reflective mirror, and a condensing lens (28) which are arrayed in that order as viewed from the light source, with said the 1/4 wavelength plate being located between the light source and the first mirror (34).

8. The inner drum exposure apparatus according to claim 1, further comprising a central control unit (40) that controls the light source and the scanning unit.

9. The inner drum exposure apparatus according to claim 8, wherein: the scanning unit comprises a spinner mirror device; the light source comprises a semiconductor laser light source; and recording of an image onto the recording medium is performed while the spinner mirror device and the semiconductor laser light source are being controlled by the central control unit.

10. An inner drum exposure apparatus wherein a light beam modulated in accordance with image information is deflected, by a rotationally driven reflective mirror surface of a scanning unit, and scanned with respect to a recording medium supported on an arcuate inner circumferential surface (14) formed on a support body, thereby recording an image, the apparatus comprising:

    a random polarization unit that causes a randomly polarized light beam to be incident on the reflective mirror surface (18A) of the scanning unit; and
    a single-axis crystal optical element (26) mounted so as to rotate integrally with the reflective mirror surface and disposed such that a plane in which the randomly polarized light beam is incident onto and outgoing from the reflective mirror surface and a plane containing a crystal optical axis of the single-axis crystal optical element and a normal to the incident plane of the single-axis crystal optical element become coplanar, wherein the light beam is split by the single-axis crystal optical element into equal light quantities in an ordinary ray and an extraordinary ray which form two beam spots arrayed adjacent to each other in a sub-scanning direction so as to be partially superposed onto said arcuate inner surface.

**11.** An inner drum exposure apparatus wherein a recording medium is supported on an arcuate inner circumferential surface formed on a support body, and a plurality of light beams modulated in accordance with image information are deflected and scanned onto the arcuately supported recording medium, the apparatus comprising:

> a light beam output unit(s) (30A, 30B) that emits the plurality of light beams;
>
> a scanning unit (16) including a reflective mirror surface (18A) having a rotation axis that coincides with a center axis of the arcuate inner circumferential surface of the support body and which scans on the recording medium by reflecting the plurality of light beams with the rotating reflective mirror surface;
>
> a light deflecting unit that causes the light beams to be relatively deflected 2-dimensionally in a plane orthogonal to the rotation axis of the scanning unit and shifted on the recording medium in a main-scanning direction and in a sub-scanning direction;
>
> a control unit that controls positions where the light beams are shifted on the recording medium by the light deflecting unit, in synchronism with rotation of the reflective mirror surface;
>
> a 1/4 wavelength plate (32) disposed in a light path between the light beam output unit and the scanning unit and which converts linearly-polarized plural light beams emitted from the light beam output unit to circularly-polarized light; and
>
> a single-axis crystal optical element (26) mounted so as to rotate integrally with the reflective mirror surface, and

disposed between the 1/4 wavelength plate and the reflective mirror surface and disposed such that a plane in which the light beams are incident on and outgoing from the reflective mirror surface and a plane containing a crystal optical axis of the single-axis crystal optical element and a normal to the incident plane of the single-axis crystal optical element become coplanar, wherein each of the plurality of light beams is split by the single-axis crystal optical element into equal light quantities in an ordinary ray and an extraordinary ray which form two beam spots arrayed adjacent to each other in a sub-scanning direction so as to be partially superposed onto said arcuate inner surface.

**12.** The inner drum exposure apparatus according to claim 11, wherein the light beam output unit comprises: a first (40A) and a second (30B) semiconductor laser light source that emit a first and a second linearly-polarized laser beam respectively; a first (44) and a second (46) collimator lens that transform the first and the second laser beam to parallel beams; and a polarized light beam splitter (48) that combines the first and the second laser beam.

**13.** The inner drum exposure apparatus according to claim 11, wherein the scanning unit comprises a spinner mirror device.

**14.** The inner drum exposure apparatus according to claim 11, wherein the light deflecting unit comprises a first (52x) and a second (52y) acousto-optic element.

**15.** The inner drum exposure apparatus according to claim 11, wherein the control unit comprises: a control circuit that generates a control clock signal; a cosine wave signal generating circuit that generates a cosine wave voltage signal in accordance with the control clock signal; a sine wave signal generating circuit that generates a sine wave voltage signal in accordance with the control clock signal; a first voltage-controlled oscillator that generates a frequency-modulated signal from the cosine wave voltage signal; a second voltage-controlled oscillator that generates a frequency-modulated signal from the sine wave voltage signal; a first amplifier that amplifies the frequency-modulated signal from the first voltage-controlled oscillator; and a second amplifier that amplifies the frequency-modulated signal from the second voltage-controlled oscillator.

**16.** The inner drum exposure apparatus according to claim 11, wherein the light deflecting unit comprises a first (52x) and a second (52y) electro-optic element.

**17.** The inner drum exposure apparatus according to claim 11, wherein the light beam output unit comprises at least three semiconductor laser light sources.

**18.** The inner drum exposure apparatus according to claim 11, further comprising a light source side optical system including a first (34) and a second (36) reflective mirror, and a condensing lens (28) which are arrayed in that order as viewed from the light beam output unit, with said 1/4 wavelength plate being located between the light source and the first mirror (34).

## Patentansprüche

**1.** Innentrommel-Belichtungsvorrichtung, in der ein mit Bildinformation modulierter Lichtstrahl durch eine drehend angetriebene reflektierende Spiegelfläche einer Abtasteinheit abgelenkt und abtastend über ein Aufzeichnungsmedium geführt wird, welches auf einer bogenförmigen Innenumfangsfläche (14) eines Trägerkörpers gebildet ist, um **dadurch** ein Bild aufzuzeichnen, umfassend:

eine Lichtquelle (30), die einen linear polarisierten Lichtstrahl emittiert;

ein 1/4-Wellenlängenplättchen (32), welches in einem Lichtweg zwischen der Lichtquelle und der Abtasteinheit (16) angeordnet ist und den von der Lichtquelle emittierten, linear polarisierten Lichtstrahl in kreisförmig polarisiertes Licht umwandelt; und

ein optisches Einzelachsen-Kristallelement (26), welches zwischen dem 1/4-Wellenlängenplättchen und der reflektierenden Spiegelfläche (18a) angeordnet und zusammen mit der reflektierenden Spiegelfläche drehend gelagert ist, derart, daß eine Ebene, in welcher der Lichtstrahl auf die reflektierende Spiegelfläche auftrifft und von ihr abgeht, und eine Kristallachse des optischen Einzelachsen-Kristallelements im wesentlichen parallel zueinander verlaufen, wodurch der Lichtstrahl von dem optischen Einzelachsen-Kristallelement aufgetrennt wird in gleiche Lichtmengen in Form eines ordentlichen und eines außerordentlichen Strahls, die zwei Strahlflecken bilden, die einander in Nebenabtastrichtung und teilweise einander überlappend auf der bogenförmigen Innenfläche angeordnet sind.

2. Vorrichtung nach Anspruch 1, bei der die Abtasteinheit eine Umlaufspiegeleinheit (18, 20) aufweist.

3. Vorrichtung nach Anspruch 1, bei der das optische Einzelachsen-Kristallelement ein Strahlversetzungs-Prisma aufweist, dessen optische Kristallachse gegenüber einer Flächennormalen der Einfallebene um 45 Grad geneigt ist.

4. Vorrichtung nach Anspruch 1, bei der das optische Einzelachsen-Kristallelement kristallines Quarz als Werkstoff verwendet.

5. Vorrichtung nach Anspruch 1, bei der die Lichtquelle eine Halbleiterlaser-Lichtquelle aufweist.

6. Vorrichtung nach Anspruch 5, bei der die Halbleiterlaser-Lichtquelle einen Einzel-Lateralmoden-Halbleiterlaser mit einer Intensitätsverteilung aufweist, gemäß der die Lichtintensität in der Mitte hoch ist und mit zunehmendem Abstand von der Mitte allmählich geringer wird.

7. Vorrichtung nach Anspruch 1, weiterhin umfassend ein lichtquellenseitiges optisches System mit einem ersten (34) und einem zweiten (36) reflektierenden Spiegel und einer Sammellinse (28), die in dieser Reihenfolge ausgehend von der Lichtquelle angeordnet sind, wobei das 1/4-Wellenlängenplättchen sich zwischen der Lichtquelle und dem ersten Spiegel (34) befindet.

8. Vorrichtung nach Anspruch 1, weiterhin umfassend eine zentrale Steuereinheit (40), die die Lichtquelle und die Abtasteinheit steuert.

9. Vorrichtung nach Anspruch 8, bei der die Abtasteinheit eine Umlaufspiegeleinheit aufweist, die Lichtquelle eine Halbleiterlaser-Lichtquelle aufweist, und das Aufzeichnen eines Bilds auf dem Aufzeichnungsmedium erfolgt, während die Umlaufspiegeleinheit und die Halbleiterlaser-Lichtquelle von der zentralen Steuereinheit gesteuert werden.

10. Innentrommel-Belichtungsvorrichtung, in der ein mit Bildinformation modulierter Lichtstrahl durch eine drehend angetriebene reflektierende Spiegelfläche einer Abtasteinheit abgelenkt wird und abtastend über ein Aufzeichnungsmedium geführt wird, welches von einer bogenförmigen inneren Umfangsfläche (14) eines Trägerkörpers gelagert wird, um **dadurch** ein Bild aufzuzeichnen, umfassend:

eine regellose Polarisationseinheit, die einen regellos polarisierten Lichtstrahl dazu bringt, auf die reflektierende Spiegelfläche (18A) der Abtasteinheit aufzutreffen; und

ein optisches Einzelachsen-Kristallelement (26), welches zusammen mit der reflektierenden Spiegelfläche drehend gelagert und derart angeordnet ist, daß eine Ebene, in welcher der regellos polarisierte Lichtstrahl auf die reflektierende Spiegelfläche auftrifft und von ihr weggeht, und eine Ebene, die eine optische Kristallachse des optischen Einzelachsen-Kristallelements und eine Flächennormale auf die Auftreffläche des optischen Einzelachsen-Kristallelements enthält, koplanar sind, wobei der Lichtstrahl von dem optischen Einzelachsen-Kristallelement aufgetrennt wird in gleiche Lichtmengen in Form eines ordentlichen Strahls und eines außerordentlichen Strahls, die zwei Strahlflecken bilden, die einander benachbart in einer Nebenabtastrichtung und einander teilweise überlappend auf der bogenförmigen Innenfläche angeordnet sind.

11. Innentrommel-Belichtungsvorrichtung, in der ein Aufzeichnungsmedium auf einer bogenförmigen Innenumfangsfläche eines Trägerkörpers gebildet ist und eine Mehrzahl von mit Bildinformation modulierten Lichtstrahlen auf das bogenförmig gelagerte Aufzeichnungsmedium abgelenkt und abtastend über dieses geführt werden, umfassend:

ein oder mehrere Lichtstrahl-Ausgabeeinheiten (30A, 30B), die mehrere Lichtstrahlen emittiert bzw. emittieren;

eine Abtasteinheit (16) mit einer reflektierenden Spiegelfläche (18A), deren Drehachse übereinstimmt mit einer Mittelachse einer bogenförmigen Innenumfangsfläche des Trägerkörpers, und die das Aufzeichnungsmedium abtastet durch Reflektieren der mehreren Lichtstrahlen mit Hilfe der sich drehenden reflektierenden Spiegelfläche;

eine Lichtdetektoreinheit, die die Lichtstrahlen dazu bringt, zweidimensional in einer Ebene orthogonal zur Drehachse der Abtasteinheit und auf dem Aufzeichnungsmedium in einer Hauptabtastrichtung und in einer Nebenabtastrichtung verschoben relativ abgelenkt zu werden;

eine Steuereinheit, die Stellen steuert, an denen die Lichtstrahlen auf dem Aufzeichnungsmedium von der Lichtablenkeinheit verschoben werden, synchron mit der Drehung der reflektierenden Spiegelfläche;

ein 1/4-Wellenlängenplättchen (32), angeordnet in einem Lichtweg zwischen der Lichtstrahlausgabeeinheit und der Abtasteinheit, welches linear polarisierte Lichtstrahlen, die von de Lichtstrahlausgabeeinheit emittiert werden, in kreisförmig polarisiertes Licht umwandelt; und

ein optisches Einzelachsen-Kristallelement, welches zusammen mit der reflektierenden Spiegelfläche drehend gelagert ist und sich zwischen dem 1/4-Wellenlängenplättchen und der reflektierenden Spiegelfläche derart angeordnet befindet, daß eine Ebene, in welcher die Lichtstrahlen auf die reflektierende Spiegelfläche auftreffen und von ihr weggehen, und eine Ebene, die eine optische Kristallachse des optischen Einzelachsen-Kristallelements und eine Flächennormale auf die Einfallfläche des optischen Einzelachsen-Kristallelements enthält, koplanar werden, wobei jeder der mehreren Lichtstrahlen von dem optischen Einzelachsen-Kristallelement aufgetrennt wird in gleiche Lichtmengen in Form eines ordentlichen Strahls und eines außerordentlichen Strahls, die zwei Lichtflecken bilden, die benachbart zueinander in einer Nebenabtastrichtung und einander teilweise überlappend auf der bogenförmigen Innenfläche angeordnet sind.

12. Vorrichtung nach Anspruch 11, bei der die Lichtstrahlausgabeeinheit aufweist: eine erste (30A) und eine zweite (30B) Halbleiterlaser-Lichtquelle, die einen ersten bzw. einen zweiten linear polarisierten Laserstrahl emittieren; eine erste (44) und eine zweite (46) Sammellinse, die den ersten und den zweiten Laserstrahl in parallele Strahlbündel umwandeln, und einen Polarisationslicht-Strahlenteiler, der den ersten und den zweiten Laserstrahl miteinander kombiniert.

13. Vorrichtung nach Anspruch 11, bei der die Abtasteinheit eine Umlaufspiegeleinrichtung aufweist.

14. Vorrichtung nach Anspruch 11, bei der die Lichtablenkeinheit ein erstes (52x) und ein zweites (52y) akustooptisches Element aufweist.

15. Vorrichtung nach Anspruch 11, bei der die Steuereinheit aufweist: eine Steuerschaltung, die ein Steuertaktsignal erzeugt; eine Cosinuswellensignal-Erzeugungsschaltung, die ein Cosinuswellen-Spannungssignal nach Maßgabe des Steuertaktsignals erzeugt; eine Sinuswellensignal-Erzeugungsschaltung, die ein Sinuswellen-Spannungssignal entsprechend dem Steuertaktsignal erzeugt; einen ersten spannungsgesteuerten Oszillator, der aus dem Cosinuswellen-Spannungssignal ein frequenzmoduliertes Signal bildet; einen zweiten spannungsgesteuerten Oszillator, der aus dem Sinuswellen-Spannungssignal ein frequenzmoduliertes Signal erzeugt; einen ersten Verstärker, der das frequenzmodulierte Signal von dem ersten spannungsgesteuerten Oszillator verstärkt, und einen zweiten Verstärker, der das frequenzmodulierte Signal von dem zweiten spannungsgesteuerten Oszillator verstärkt.

16. Vorrichtung nach Anspruch 11, bei der die Lichtablenkeinheit ein erstes (52x) und ein zweites (52y) elektrooptisches Element aufweist.

17. Vorrichtung nach Anspruch 11, bei der die Lichtstrahlausgabeeinheit mindestens drei Halbleiterlaser-Lichtquellen aufweist.

18. Vorrichtung nach Anspruch 11, weiterhin umfassend ein lichtquellenseitiges optisches System mit einem ersten (34) und einem zweiten (36) reflektierenden Spiegel, und einer Sammellinse (28), die in dieser Reihenfolge ausgehend von der Lichtstrahlausgabeeinheit angeordnet sind, wobei das 1/4-Wellenlängenplättchen sich zwischen der Lichtquelle und dem ersten Spiegel (34) befindet.

## Revendications

1. Appareil d'exposition à tambour interne, dans lequel un faisceau lumineux modulé selon des informations d'image est défléchi par une surface de miroir réfléchissant entraînée de façon rotative d'une unité de balayage, et balaie un support d'enregistrement supporté sur une surface circonférentielle intérieure courbe (14) formée sur un corps de support, enregistrant ainsi une image, l'appareil comprenant :

une source de lumière (30) qui émet un faisceau lumineux polarisé linéairement ;

une plaque de ¼ de longueur d'onde (32) disposée dans une trajectoire de lumière entre la source de lumière et l'unité de balayage (16) et convertissant le faisceau lumineux polarisé linéairement émis par la source de lumière en une lumière polarisée circulairement ; et

un élément optique en cristal uniaxe (26) disposé entre la plaque de ¼ de longueur d'onde et la surface de miroir réfléchissant (18A) et monté de manière à tourner intégralement avec la surface de miroir réfléchissant, de telle sorte qu'un plan dans lequel le faisceau lumineux est incident sur et sort de la surface de miroir réfléchissant et un axe de cristal de l'élément optique en cristal uniaxe deviennent essentiellement parallèles l'un à l'autre, dans lequel le faisceau lumineux est divisé par l'élément optique en cristal uniaxe en quantités de lumière égales en un rayon ordinaire et un rayon extraordinaire qui forment deux points de faisceau disposés à proximité l'un de l'autre dans une direction de balayage secondaire de manière à être partiellement superposés sur la surface intérieure courbe.

2. Appareil d'exposition à tambour interne selon la revendication 1, dans lequel l'unité de balayage comprend un dispositif de miroir tournant (18, 20).

3. Appareil d'exposition à tambour interne selon la revendication 1, dans lequel l'élément optique en cristal uniaxe comprend un prisme de déplacement de faisceau dont l'axe optique du cristal est incliné de 45 degrés par rapport à la normale d'un plan incident.

4. Appareil d'exposition à tambour interne selon la revendication 1, dans lequel l'élément optique en cristal uniaxe utilise du quartz cristallin comme matière pour celui-ci.

5. Appareil d'exposition à tambour interne selon la revendication 1, dans lequel la source de lumière comprend une source de lumière laser à semi-conducteur.

6. Appareil d'exposition à tambour interne selon la revendication 5, dans lequel la source de lumière laser à semi-conducteur comprend un laser à semi-conducteur à mode latéral unique présentant une distribution d'intensité telle que l'intensité lumineuse soit élevée au centre et diminue graduellement au fur et à mesure que la distance par rapport au centre augmente.

7. Appareil d'exposition à tambour interne selon la revendication 1, comprenant en outre un système optique latéral de source de lumière comprenant un premier (34) et un deuxième (36) miroirs réfléchissants et une lentille condensatrice (28) qui sont disposés dans cet ordre lorsqu'on regarde à partir de la source de lumière, où ladite plaque de ¼ de longueur d'onde est située entre la source de lumière et le premier miroir (34).

8. Appareil d'exposition à tambour interne selon la revendication 1, comprenant en outre une unité centrale de commande (40) qui commande la source de lumière et l'unité de balayage.

9. Appareil d'exposition à tambour interne selon la revendication 8, dans lequel l'unité de balayage comprend un dispositif de miroir tournant, la source de lumière comprend une source de lumière laser à semi-conducteur, et l'enregistrement d'une image sur le support d'enregistrement est exécuté pendant que le dispositif de miroir tournant et la source de lumière laser à semi-conducteur sont commandés par l'unité centrale de commande.

10. Appareil d'exposition à tambour interne, dans lequel un faisceau lumineux modulé selon des informations d'image est défléchi par une surface de miroir réfléchissant entraînée de façon rotative d'une unité de balayage, et balaie un support d'enregistrement supporté sur une surface circonférentielle intérieure courbe (14) formée sur un corps de support, enregistrant ainsi une image, l'appareil comprenant :

une unité de polarisation aléatoire qui entraîne un faisceau lumineux polarisé de façon aléatoire à être incident sur la surface de miroir réfléchissant (18A) de l'unité de balayage ; et

un élément optique en cristal uniaxe (26) monté de manière à tourner intégralement avec la surface de miroir réfléchissant et disposé de telle sorte qu'un plan dans lequel le faisceau lumineux polarisé de façon aléatoire est incident sur et sort de la surface de miroir réfléchissant et un plan contenant un axe optique du cristal de l'élément optique en cristal uniaxe et une normale au plan incident de l'élément optique en cristal uniaxe deviennent coplanaires, dans lequel le faisceau lumineux est divisé par l'élément optique en cristal uniaxe en quantités de lumière égales en un rayon ordinaire et un rayon extraordinaire qui forment deux points de faisceau disposés à proximité l'un de l'autre dans une direction de balayage secondaire de manière à être partiellement superposés sur la surface intérieure courbe.

11. Appareil d'exposition à tambour interne, dans lequel un support d'enregistrement est supporté sur une surface circonférentielle intérieure courbe formée sur un corps de support, et une pluralité de faisceaux lumineux modulés selon des informations d'image sont défléchis et balaient le support d'enregistrement supporté de façon courbe, l'appareil comprenant :

une ou plusieurs unités de génération de faisceau lumineux (30A, 30B) qui émettent une pluralité de faisceaux lumineux ;

une unité de balayage (16) comprenant une surface de miroir réfléchissant (18A) présentant un axe de rotation qui coïncide avec un axe central de la surface circonférentielle intérieure courbe du corps de support et qui effectue un balayage sur le support d'enregistrement en réfléchissant la pluralité de faisceaux lumineux avec la surface de miroir réfléchissant rotative ;

une unité de déflexion de lumière qui entraîne les faisceaux lumineux à être relativement défléchis de façon bidimensionnelle dans un plan orthogonal à l'axe de rotation de l'unité de balayage et décalés sur le support d'enregistrement dans une direction de balayage principale et dans une direction de balayage secondaire ;

une unité de commande qui commande les positions dans lesquelles les faisceaux lumineux sont décalés sur le support d'enregistrement par l'unité de déflexion de lumière, de façon synchronisée avec la rotation de la surface de miroir réfléchissant ;

une plaque de ¼ de longueur d'onde (32) disposée dans une trajectoire de lumière entre l'unité de génération de faisceau lumineux et l'unité de balayage et convertissant les différents faisceaux lumineux polarisés linéairement émis par l'unité de génération de faisceau lumineux en une lumière polarisée circulairement ; et

un élément optique en cristal uniaxe (26) monté de manière à tourner intégralement avec la surface de miroir réfléchissant et disposé entre la plaque de ¼ de longueur d'onde et la surface de miroir réfléchissant et disposé de telle sorte qu'un plan dans lequel les faisceaux lumineux sont incidents sur et sortent de la surface de miroir réfléchissant et un plan contenant un axe optique du cristal de l'élément optique en cristal uniaxe et une normale au plan incident de l'élément optique en cristal uniaxe deviennent coplanaires, dans lequel chacun ou la pluralité de faisceaux lumineux est divisé par l'élément optique en cristal uniaxe en quantités de lumière égales en un rayon ordinaire et un rayon extraordinaire qui forment deux points de faisceau disposés à proximité l'un de l'autre dans une direction de balayage secondaire de manière à être partiellement superposés sur la surface intérieure courbe.

12. Appareil d'exposition à tambour interne selon la revendication 11, dans lequel l'unité de génération de faisceau lumineux comprend : une première (40A) et une deuxième (40B) sources de lumière laser à semi-conducteur qui émettent un premier et un deuxième faisceaux laser polarisés linéairement, respectivement ; une première (44) et une deuxième (46) lentilles de collimation qui transforment les premier et deuxième faisceaux laser en faisceaux parallèles ; et un séparateur de faisceau lumineux polarisé (48) qui combine les premier et deuxième faisceaux laser.

13. Appareil d'exposition à tambour interne selon la revendication 11, dans lequel l'unité de balayage comprend un dispositif de miroir rotatif.

14. Appareil d'exposition à tambour interne selon la revendication 11, dans lequel l'unité de déflexion de lumière comprend un premier (52X) et un deuxième (52Y) éléments acousto-optiques.

15. Appareil d'exposition à tambour interne selon la revendication 11, dans lequel l'unité de commande comprend : un circuit de commande qui génère un signal d'horloge de commande ; un circuit de génération de signal d'onde cosinusoïdal qui génère un signal de tension d'onde cosinusoïdal selon le signal d'horloge de commande ; un circuit de génération de signal d'onde sinusoïdal qui génère un signal de tension d'onde sinusoïdal selon le signal d'horloge de commande ; un premier oscillateur commandé par la tension qui génère un signal de fréquence modulée à partir du signal de tension d'onde cosinusoïdal; un deuxième oscillateur commandé par la tension qui génère un signal de fréquence modulée à partir du signal de tension d'onde sinusoïdal ; un premier amplificateur qui amplifie le signal de fréquence modulée généré par le premier oscillateur commandé par la tension ; et un deuxième amplificateur qui amplifie le signal de fréquence modulée généré par le deuxième oscillateur commandé par la tension.

16. Appareil d'exposition à tambour interne selon la revendication 11, dans lequel l'unité de déflexion de lumière comprend un premier (52X) et un deuxième (52Y) éléments électro-optiques.

17. Appareil d'exposition à tambour interne selon la revendication 11, dans lequel l'unité de génération de faisceau lumineux comprend au moins trois sources de lumière laser à semi-conducteur.

18. Appareil d'exposition à tambour interne selon la revendication 11, comprenant en outre un système optique latéral de source de lumière comprenant un premier (34) et un deuxième (36) miroirs réfléchissants et une lentille condensatrice (28) qui sont disposés dans cet ordre lorsqu'on regarde à partir de l'unité de génération de faisceau lumineux, ladite plaque de ¼ de longueur d'onde étant située entre la source de lumière et le premier miroir (34).

# FIG.1

CENTRAL CONTROL UNIT — 40

LASER DRIVER — 42

LASER LIGHT SOURCE — 30

SPINNER DRIVER — 22

34

1/4 PLATE — 32

L

16

18A 18 20

28

C

26

24

36

X

L

X

Y

Z

10

14

12

# FIG.2

# FIG.3

INCIDENT PLANE

CRYSTAL OPTICAL AXIS

45°

NORMAL

L

Po

Pe

26

## FIG.4

## FIG.5

FIG.6

FIG.7A

FIG.7B

FIG.7C

FIG.8A

FIG.8B

# FIG.9

## FIG.10A

## FIG.10B

# FIG.11